# EUROPÄISCHE PATENTSCHRIFT

(11) **EP 0 829 588 B1**
(45) Veröffentlichungstag und Bekanntmachung des Hinweises auf die Patenterteilung: **19.12.2001**
(21) Anmeldenummer: 97115879.5
(22) Anmeldetag: 12.09.1997
(51) Int. Cl.: E04B 1/74

(54) **Halbzeug, nämlich Dämmplatte, insbesondere für einen Fussboden-, Decken- oder Wandaufbau**
Semi-finished product, namely insulation panel for a floor, ceiling or wall
Produit intermédiaire, à savoir panneau d'isolation pour plancher, plafond ou mur

(30) Priorität: 17.09.1996 DE 29616127 U
(43) Veröffentlichungstag der Anmeldung: 18.03.1998
(73) Patentinhaber: Wedi, Stephan, 48282 Emsdetten (DE)
(72) Erfinder: Wedi, Stephan, 48282 Emsdetten (DE)
(74) Vertreter: Hoffmeister, Helmut, Dr. Dipl.-Phys.

(56) Entgegenhaltungen:
- DE-A- 2 757 229
- DE-A- 3 503 207
- DE-A- 4 121 081
- DE-A- 4 415 406
- FR-A- 2 175 056
- GB-A- 1 166 635
- GB-A- 1 594 350
- US-A- 4 174 308

## Beschreibung

Die Erfindung betrifft ein Halbzeug, nämlich Dämmplatte, insbesondere für einen Fußboden-, Decken- oder Wandaufbau, das einen Kern mit zwei glatten Flachseiten aufweist, von denen wenigstens eine mit einer Schicht überzogen ist, wobei der Kern aus einem mit Bindemittel agglomierten Gemisch besteht.

Aus der DE 42 36 909 A1 ist ein agglomiertes Gefüge aus Teppichboden-Mischabfall, Gummigranulat und Polyurethan-Bindemittel bekannt, das auf eine gewünschte Endstärke zu einer Bauplatte zusammengepreßt wird. Der Teppichboden-Mischabfall beinhaltet, wie bekannt, auch Schaumstoff-Körper. Eine der Flachseiten der Bauplatte kann mit Polyurethan-Bindemittel besprüht und mit Quarzsand bestreut werden.

Ferner ist der DE 44 15 406 A1 eine Dämmplatte zu entnehmen, die aus homogenem Gemisch aus Schaumstofflocken, Gummihaargranulat und Polyurethan-Bindemittel besteht. Anstelle des Polyurethan-Bindemittels kann ein natürlicher Binder, wie Latex, beigegeben werden.

Weiterhin ist aus der DE 41 21 081 A1 eine aus Gummi-, Kunststoff- und Schaumpolystyrolabfall bestehende Bauplatte bekannt, wobei das Gemisch mit Bindemittel benetzt ist.

Nachteilig bei den oben aufgeführten Dämmplatten ist, daß sie entweder biegesteif, oder relativ dick sind. Als Bestandteil der Platte tritt Bindemittel auf, das die Herstellungskosten erhöht. Ein weiterer Nachteil ist, daß der Gummiabfall besonders geruchsintensiv ist.

Aus der DE 42 34 269 C1 ist eine Verbundplatte bekannt. Hierbei wird auf einen Kern ein Glasfasergewebe aufgebracht, das in einen aushärtenden zementhaltigen Mörtel eingebettet wird und innerhalb des erstarrten Mörtels eine Armierung bildet. Allerdings ist der Kern ein Schaumstoffkern von 15 mm, der zusammen mit den Armierungen eine hohe Verwindungssteifigkeit sichert.

Es stellt sich demnach die Aufgabe, das eingangs genannte Halbzeug, nämlich eine Dämmplatte, insbesondere für einen Fußboden-, Decken- oder Wandaufbau so weiter zu entwickeln, daß es leichter und billiger verarbeitbar ist, ohne daß die hervorragenden Wärme- und Geräuschdämmungseigenschaften nachteilig beeinflußt werden, wobei das Halbzeug als Verkaufsprodukt plattenweise oder in Rollen dargeboten werden kann. Weitere Aufgabe der Erfindung ist, die Geruchsbelästigung einzuschränken.

Erfindungsgemäß wird diese Aufgabe durch die Merkmale des Anspruchs 1 gelöst.

Die mit der Erfindung erzielten Vorteile bestehen insbesondere darin, daß der Gummischrot und der Kunststoff-Hartschaum nicht übereinander, sondern ineinander zu einer einheitlichen Platte verarbeitet werden. Hierzu wird der Kunststoff-Hartschaum zu Kunststoff-Hartschaumkörpern granuliert. Die so entstehende Dämmplatte erhält durch den Anteil an Gummischrot die hohen schalldämmenden und durch den Anteil an Kunststoff-Hartschaumkörpern die wärmedämmenden Eigenschaften. Wesentlich ist, daß der Gummischrotanteil die Elastizität der Dämmplatte bestimmt. Wesentlich ist darüberhinaus, daß sich durch das Vermischen beider Anteile der Abstand zwischen zwei sich gegenüberliegenden Außenseiten sehr stark reduziert. Dieser Abstand kann zwischen 3 und 14 mm, vorzugsweise 5 mm betragen. Die elastischen Eigenschaften der Dämmplatte und der Abstand zwischen zwei glatten Außenflächen erlauben eine bahnförmige Ausbildung, ein Aufrollen der Bahn und ein Verarbeiten, wie es im allgemeinen von Tapeten bekannt ist.

Der Gummischrot kann eine Schrotlänge zwischen 0,1 und 15 mm und eine Schrotbreite zwischen 0,01 und 5 mm haben. Die einzelnen Körper des Gummischrots haben damit eine im wesentlichen unregelmäßige längliche Konfiguration mit einer unregelmäßigen Oberfläche.

Die Konfiguration der einzelnen Bestandteile des Gummischrots wird durch die Art und Weise seiner Herstellung bestimmt. Er kann aus gehäckseltem Gummi oder Altgummi bestehen.

Im Gemisch ist Luft eingeschlossen, die einen Anteil von 10 bis 70 % am Gesamtvolumen hat. Die Luft wird bei einem Vermischen des Gummischrots und der Kunststoff-Hartschaumkörper "eingemischt". Luft ist aber insbesondere bereits in den granulierten Kunststoff-Hartschaumkörpern enthalten. Beim Eingeben des Gemisches in eine Form, anschließendem Pressen und Ausvulkanisieren des Gummischrots entweicht ein Teil der eingemischten Luft. Die in die Kunststoff-Hartschaumkörper eingeschlossene Luft verbleibt aber in ihnen, so daß der Luftanteil am Gesamtvolumen der fertigen Dämmplatte dann zwischen 10 und 70 % betragen kann.

Wenigstens eine der glatten Außenseiten kann mit einer Schicht aus einem aushärtbaren Kunstharzmörtel und/oder einer Schicht aus aushärtbarem Kunstharzmörtel, in die ein Armierungsgewebe eingebettet ist, bezogen werden. Durch dieses Beschichten läßt sich die Außenfläche be- und verarbeiten. So wird ein Verputzen, ein Bekleben mit Tapeten oder ein Verfliesen erleichtert. Darüberhinaus bindet die Beschichtung den vom Gummischrot ausgehenden Gummigeruch.

In die Beschichtung aus Kunstharzmörtel können Wärmeübertragungsträger eingebracht sein. Als Wärmeübertragungsträger können Heizdrähte eingebracht werden, die auf eine der Außenflächen aufgelegt und dann in den Kunstharzmörtel eingebettet werden.

Zur Beibehaltung der Flexibilität der Dämmplatte kann ein Kunstharzmörtel eingesetzt werden, der nach dem Aushärten hochelastisch ist.

Ein Ausführungsbeispiel der Erfindung ist in der Zeichnung dargestellt und wird im folgenden näher beschrieben. Es zeigen
- Fig. 1: eine Dämmplatte in einer schematischen, perspektivischen Teildarstellung;
- Fig. 2: einen Teilschnitt einer Dämmplatte gem. Fig. 1 entlang der Linie II - II in einer schematischen Darstellung;
- Fig. 3: einen Fußbodenaufbau mit einer Dämmplatte gem. den Fig. 1 und 2 in einer schematischen, perspektivischen Teildarstellung;
- Fig. 4: einen Wandaufbau mit einer Dämmplatte gem. Fig. 1 und 2 in einer schematischen, perspektivischen Teildarstellung,

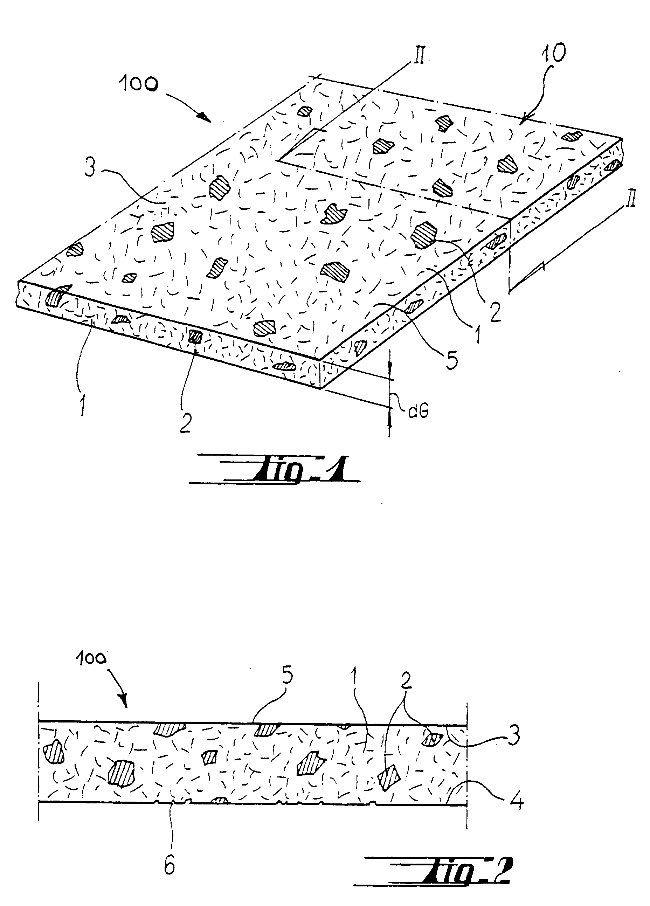

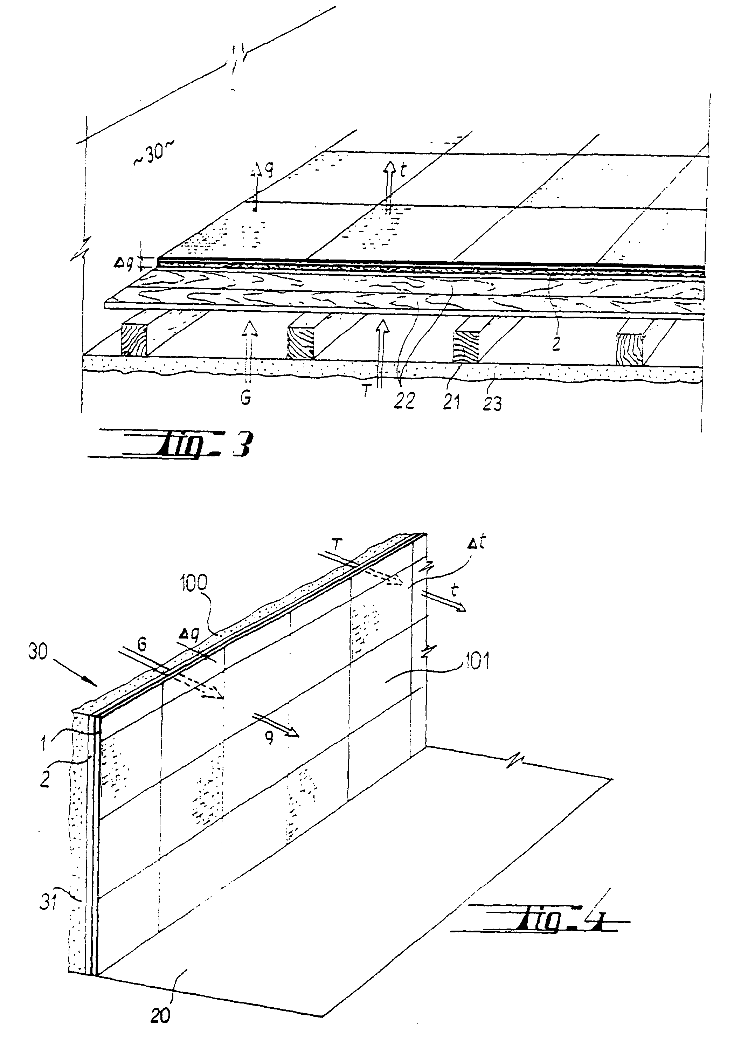

In den Fig. 1 und 2 ist eine Dämmplatte 100 dargestellt.

Sie besteht aus einem Kern 10 aus einem agglomierten Gemisch aus
- 60 bis 95 Vol % Gummischrot 1,
- 5 bis 30 Vol % Kunststoff-Hartschaumkörpern 2 und
- Bindemittel mit
- 10 bis 70 Vol % Luft sowie
- einer Beschichtung.

Der Gummischrot 1 wird aus Gummi oder Altgummi gehäckselt. Die einzelnen Gummiteilchen haben eine Schrotlänge zwischen 0,1 und 15 mm und eine Schrotbreite zischen 0,01 und 5 mm. Durch das Häckseln haben die Schrotteilchen alle eine unterschiedliche Konfiguration.

Die Kunststoff-Hartschaumkörper sind aus Hartschaum, insbesondere aus Polystyrol oder Polyvinylchlorid granuliert. Als Ausgangsstoffe für die Herstellung von Hartschaumstoffen sind weiterhin bekannt:
Polymethacylemid, Phenol-Formaldehydharz, Harnstoffe, Phenolharz und Polyurethane. Einige Hartschaumstoffe sind als leicht- andere als schwer entflammbar einzustufen, worauf bei der Verarbeitung geachtet werden muß. Die Kunststoff-Hartschaumkörper 2 haben eine Siebkörnung zwischen 0,5 und 50 mm.

Der gehäckselte Gummischrot 1 und die Kunststoff-Hartschaumkörper 2 werden in angegebenen Verhältnis zueinander gegeben und vermischt. Beim Vermischen wird ein Anteil von Luft am Gesamtvolumen min eingemischt. Ein weiterer Anteil Luft ist bereits in den granulierten Kunststoff-Hartschaumkörpern 2 enthalten.

Dieses Gemisch wird unter Druck- und/oder Temperatureinwirkungen durch Vulkanisieren agglomiert und zu einem Kern 10 geformt, und zwar derart, daß vom agglomierten Block plattenförmige Kerne 10 abgeschält werden. Der zusammenhaftende Gummischrot 1 bildet das Gerüst des Kerns 10 und verleiht ihr vorallem die elastischen und geräuschdämmenden Eigenschaften. Die vom Gummischrot 1 eingeschlossenen Kunststoff-Hartschaumkörper 2 hingegen verleihen der Platte gute wärmedämmende Eigenschaften. Sie sind, wie die Fig. 1 und 2 deutlich machen, gleichmäßig vom Korpus des vulkanisierten Gummischrots 1 angeschlossen. Das Vermischen und Zusammenfügen beider Gemischanteile gestattet es, den plattenförmigen Kern 10 zwischen ihren zwei sich gegenüberliegenden glatten Außenflächen 3 und 4 mit einer Dicke d_{G} von 5 mm herzustellen. Die Dicke d_{G} kann bis 3 mm heruntergesetzt und bis 15 mm heraufgesetzt werden. Die Dämmplatte 100 mit einer Dicke d_{G} = 5 mm kann in einer Breite von 30 bis 150 cm und einer Länge von 30 bis 350 cm hergestellt werden.

Wenigstens eine der glatten Außenflächen 3, 4 ist mit einer Schicht aus aushärtbarem Kunstharzmörtel und/oder einer Schicht aus aushärtbarem Kunstharzmörtel in die ein Armierungsgewebe eingebettet ist, beschichtet (nicht dargestellt). Das Überziehen der glatten Außenflächen bindet zum einen den Gummigeruch des Gummischrots 1 und erleichtert je nach Einsatzfall das Beschichten der Dämmplatten 100 mit weiteren Materialien. Beim Beschichten mit nur einer Schicht aus aushärtbarem Kunstharzmörtel beträgt die Schichtdicke 0,01 bis 0,3 mm. Das Beschichten kann durch Besprühen, Streichen oder maschinelles Auftragen erfolgen. In die Beschichtung können Wärmeübertragungsträger, insbesondere Heizdrähte aufgenommen werden.

Die Elastizität der Dämmplatte 100 erlaubt es, sie ähnlich einer Tapete oder Gummibahn aufzurollen. Dämmplatten in einer Größe 50 x 50 cm hingegen können übereinander gestapelt, gelagert und transportiert werden.

Die Verarbeitung der Dämmplatte 100 ist in den Figuren 3 und 4 dargestellt.

In Fig. 3 ist ein Holzaufbau gezeigt, der aus tragenden Hölzern 21 besteht, die mit Fußbodenbrettern 22 benagelt sind. An der Unterseite der tragenden Hölzer befindet sich ein Deckenputz 23. Anstelle eines Holzaufbaus kann eine Betonplatte eingesetzt sein.

Auf die Fußbodenbretter 22 werden tafelförmige Dämmplatten 100, die ein Maß von 50 x 50 cm haben können, aufgeklebt. Die gleiche Schicht Dämmplatten 100 wird auf den Deckenputz 23 (nicht dargestellt) in gleicher Art und Weise aufgebracht.

In Fig. 4 ist ein Wandsystem 30 gezeigt. Hierbei werden auf eine Betonwand 31 ebenso wie auf den Fußbodenbrettern 22 nebeneinander tafelförmige Dämmplatten 100 angeklebt. Anstelle tafelförmiger Dämmplatten 100 können bahnförmige Dämmplatten 100 wie Tapeten auf die Betonwand 31 vom Holzaufbau 20 bis hoch zum Deckenputz verklebt werden.

Ein so mit Dämmplatten 100 ausgekleideter Raum mindert von außen auftretende Außengeräusche G um eine Geräuschdämmung Δg auf Innengeräusche g. In ähnlicher Weise wird eine von außen in den Raum tretende Außentemperatur T mit einer Wärmedämmung Δt auf eine Innentemperatur t gedämmt. Wesentlich ist, daß die Dämmplatte aufgrund ihrer Elastizität sich eng auf den jeweiligen Untergrund auflegt, so daß keine "Brücken" entstehen können.

Besonders vorteilhaft lassen sich die tafelförmigen bzw. bahnförmigen Dämmplatten in der beschriebenen Art und Weise beim Auskleiden von Beton- Fertigteilbauten in den neuen Bundesländern verwenden. Hier wurden Betonplatten mit einer Stahlbewehrung eingesetzt, die lediglich die von der Statik geforderten Werte einhielt. Zwischen den Betonplattenrastern sind die einzelnen Räume durch 50 mm starke Gipswände getrennt. Die Wohnungen sind deshalb sehr hellhörig. Das Auskleiden der einzelnen Räume mit tafel- und/oder bahnförmigen Dämmplatten 100 dämmt die Außengeräusche G um einen Betrag von Δg von 65 - 90 %. Die Wärmedämmung Δt beträgt etwa 50 %. Die auf den glatten Außenflächen 3, 4 vorhandenen Kreppvertiefungen 5, 6 erlauben ein einfaches Befestigen der Dämmplatten 100 sowie ein Beschichten mit Kacheln 101, Wand- und Deckenputz und/oder Tapete.

## Patentansprüche

1. Halbzeug, nämlich Dämmplatte, insbesondere für einen Fußboden-, Decken- oder Wandaufbau, das einen Kern (10) mit zwei glatten Flachseiten (3, 4) aufweist, von denen wenigstens eine mit einer Schicht überzogen ist, wobei der Kern (10) aus einem mit Bindemittel agglomierten Gemisch besteht,
**dadurch gekennzeichnet,**
- **daß** das Gemisch aus wenigstens
. 60 bis 95 Vol % Gummischrot (1) von einer Schrotlänge zwischen 0,1 und 15 mm und einer Schrotbreite zwischen 0,01 und 5 mm und
. 5 bis 30 Vol % Kunstschaumkörpern (2), die aus Weich- und/oder Hartschaum aus Polyurethan, Polystyrol oder Polyvinylchlorid bestehen und eine Siebkörnung zwischen 0,5 und 50 mm haben,
besteht und durch Vulkanisieren unter Druck und/oder Temperatureinwirkungen agglomiert ist und
- daß wenigstens eine der beiden glatten Flachseiten (3, 4) mit einer Schicht aus einem aushärtbaren, nach dem Aushärten hochelastischen Kunstharzmörtel überzogen ist, wobei die mit Kunstharzmörtel-Schicht (-en) versehene Dämmplatte derart elastisch verformbar ist, daß diese beim Andrücken auftretende Unebenheiten der zu bedeckenden Oberfläche ausgleicht, und daß diese zu einer Rolle aufwickelbar ist.

2. Halbzeug nach Anspruch 1, **dadurch gekennzeichnet, daß** der Abstand (Dicke dG) zwischen den zwei Flachseiten (3, 4) zwischen 3 und 14 mm, vorzugsweise 5 mm beträgt.

3. Halbzeug nach Anspruch 1 und 2, **dadurch gekennzeichnet, daß** in wenigstens eine der Kunstharzmörtel-Schichten ein Armierungsgewebe eingebettet ist.

4. Halbzeug nach Ansprüche 1 bis 3, **dadurch gekennzeichnet, daß** im Gemisch Luft eingeschlossen ist, die einen Anteil von 10 bis 70 % am Gesamtvolumen hat.

5. Halbzeug nach einem der Ansprüche 1 bis 4, **dadurch gekennzeichnet, daß** in der Schicht aus aushärtbarem Kunstharzmörtel Wärmeübertragungsträger, insbesondere Heizdrähte angeordnet sind.

6. Halbzeug nach wenigstens einem der Ansprüche 1 bis 5, **dadurch gekennzeichnet, daß** dem aus Gummischrot und Kunstschaumkörpern bestehenden Gemisch 0,01 bis 1,5 Gew.-% eines Geruchsabwandlers oder -überdeckungsmittels beigegeben ist.

7. Halbzeug nach Anspruch 6, **dadurch gekennzeichnet, daß** der Geruchsabwandler oder -überdeckungsmittel Cumarin, Citrusöl oder Eukalyptol ist.

## Claims

1. A semifinished article, i.e. an insulating panel or the like, particularly for a floor, ceiling or wall, comprising a core (10) with two smooth flat sides (3, 4), at least one of which is covered by a layer, the core (10) consisting of a mixture agglomerated with binder, **characterised in that**
- the mixture comprises at least 60 to 95 vol.% of scrap rubber (1) in pieces between 0.1 and 15 mm long and between 0.01 and 5 mm wide and
- 5 to 10 vol.% of foam plastic members (2) made of soft and/or hard polyurethane, polystyrene or polyvinylchloride foam and having a particle size classification between 0.5 and 50 mm, and
is agglomerated by vulcanising under pressure and/or with heating, and
- **in that** at least one of the two smooth flat sides (3, 4) is covered with a layer of a curable synthetic resin mortar which is highly elastic after setting, wherein the insulating panel or the like covered with the layer or layers of synthetic resin mortar is so elastically deformable that when pressed it compensates any irregularities in the covered surface, and the panel or the like can be wound in a roll.

2. A semifinished article according to claim 1, **characterised in that** the distance (thickness d_{G}) between the two flat sides (3, 4) is between 3 and 14 mm, preferably 5 mm.

3. A semifinished article according to claims 1 and 2, **characterised in that** a reinforcing fabric is embedded in at least one of the layers of synthetic resin mortar.

4. A semifinished article according to claims 1 to 3, **characterised in that** air is enclosed in the mixture and makes up 10 to 70% of the total volume.

5. A semifinished article according to any of claims 1 to 4, **characterised in that** heat transfer means, particularly heating wires, are disposed in the layer of curable synthetic resin mortar.

6. A semifinished article according to at least one of claims 1 to 5, **characterised in that** 0.01 to 1.5 wt.% of a smell modifier or concealer is added to the mixture of scrap rubber and foam plastic members.

7. A semifinished article according to claim 6, **characterised in that** the smell modifier or concealer is coumarine, citrus oil or eucalyptol.

## Revendications

1. Produit semi-fini, à savoir panneau isolant, notamment pour plancher, plafond ou mur, qui comporte un coeur (10) avec deux côtés plats (3, 4) lisses dont l'un au moins est recouvert d'une couche, le coeur (10) étant constitué d'un mélange aggloméré avec un liant,**caractérisé en ce que**
- le mélange est composé au moins
. de 60 à 95% en volume de caoutchouc coupé en petites pièces (1) d'une longueur comprise entre 0,1 et 15 mm et d'une largeur comprise entre 0,01 et 5 mm, et
. de 5 à 30% en volume de corps en mousse plastique rigide (2) qui sont constitués de mousse souple et/ou de mousse rigide à base de polyuréthane, de polystyrène ou de chlorure de polyvinyle et ont une granulométrie comprise entre 0,5 et 50 mm et est aggloméré par vulcanisation sous pression et/ou à chaud, et
- qu'au moins un des deux côtés plats (3, 4) lisses est revêtu d'une couche formée d'un mortier de résine synthétique durcissable, hautement élastique après durcissement, le panneau isolant pourvu d'une (de) couche(s) de mortier de résine synthétique pouvant subir une déformation élastique telle qu'il compense des irrégularités de la surface à recouvrir qui apparaissent lors de l'application, et que ce panneau isolant peut être enroulé pour former un rouleau.

2. Produit semi-fini selon la revendication 1, **caractérisé en ce que** l'écartement (épaisseur dG) entre les deux côtés plats (3, 4) est compris entre 3 et 14 mm, et est de préférence de 5 mm.

3. Produit semi-fini selon les revendications 1 et 2, **caractérisé en ce qu'**un tissu d'armature est enrobé dans au moins une des couches de mortier de résine synthétique.

4. Produit semi-fini selon les revendications 1 à 3, **caractérisé en ce que** le mélange contient de l'air qui représente entre 10 et 70% du volume total.

5. Produit semi-fini selon l'une des revendications 1 à 4, **caractérisé en ce que** des supports de transmission thermique, en particulier des filaments chauffants, sont disposés dans la couche de mortier de résine synthétique durcissable.

6. Produit semi-fini selon au moins une des revendications 1 à 5, **caractérisé en ce qu'**on ajoute au mélange composé de caoutchouc coupé en petites pièces et de corps en mousse plastique 0,01 à 1,5% en poids d'un agent modifiant ou couvrant l'odeur.

7. Produit semi-fini selon la revendication 6, **caractérisé en ce que** l'agent modifiant ou couvrant l'odeur est de la coumarine, de l'essence de citrus ou de l'eucalyptol.
